# EUROPEAN PATENT SPECIFICATION

(11) **EP 2 592 810 B1**
(45) Date of publication and mention of the grant of the patent: **03.09.2014**
(21) Application number: 12729167.2
(22) Date of filing: 09.05.2012
(51) Int. Cl.: H04L 29/08, H04L 12/28, H04L 29/06

(54) **TERMINAL INSTRUMENTATION NODE FOR A SELF-CONFIGURING AND A SECURE BUILDING AUTOMATION SYSTEM**
TERMINAL-INSTRUMENTATIONSKNOTEN FUR EIN SELBSTKONFIGURIERENDES UND GESICHERTES GEBÄUDEAUTOMATISIERUNGSSYSTEM
NOEUD TERMINAL D' INSTRUMENTATION POUR UN SYSTEME DOMOTIQUE AUTOCONFIGURANT ET SECURISE

(30) Priority: 11.05.2011 ES 201130753
(43) Date of publication of application: 15.05.2013
(73) Proprietor: Mytech Ingenieria Aplicada, S.L., 15011 A Coruña (ES)
(72) Inventor: PAZ LOPEZ, Alejandro, E-15011 A Coruña (ES); VARELA FERNANDEZ, Gervasio, E-15011 A Coruña (ES); VAZQUEZ RODRIGUEZ, Santiago, E-15011 A Coruña (ES); FAIÑA RODRIGUEZ-VILA, Andres, E-15011 A Coruña (ES); BECERRA PERMUY, Jose Antonio, E-15011 A Coruña (ES); DEIBE DIAZ, Alvaro, E-15011 A Coruña (ES); DURO FERNANDEZ, Richard J., E-15011 A Coruña (ES); LOPEZ PEÑA, Fernando, E-15011 A Coruña (ES)
(74) Representative: Carvajal y Urquijo, Isabel
(86) International application number: PCT/ES2012/070324
(87) International publication number: WO 2012/152972

(56) References cited:
- EP-A1- 1 503 537

## Description

### Field of the Art

The present invention belongs to the field of building automation and relates to the instrumentation of home and office environments.

### State of the Art

Referring to strictly structural aspects, the term instrumentation of the environment comprises communicating and integrating field devices for sensing and actuating, including both discrete (all/nothing) and proportional, electronic devices based on microcontrollers as well as higher level devices for treating information and multimedia contents.

Referring to strictly functional aspects, the term instrumentation comprises managing and integrating information which, originating from interaction with people and the environment, relates to the comfort, power, security of the installations, the security of people, leisure and all those building automation and task automation aspects.

There are many systems and technologies currently on the market intended for home and office automation. Said systems are dominated by technologies encompassed within what could be considered classic building automation. They are generally proprietary technologies not interoperable with each other which are based on installing their own communication buses to which there are connected terminal nodes in which there are sensors or actuators operating on the different elements of the installation.

There are two main approaches to provide said nodes with certain behaviour. In some technologies there is a central node of the system containing the operation logic thereof and it is responsible for controlling the terminal nodes. In others there is the option that the terminal nodes themselves have a programming defining their behaviour. In both cases the programming is established during the installation of the system; it is not usually possible for end users to modify the behaviour thereof nor is it usually possible to automatically adapt it to user needs or preferences.

There are building automation technologies within these types of systems that have considerably penetrated the market, such as EIB/KNX, Lonworks or X10.

Prior art document ep 1503537, published on 2 February 2005, discloses a centralized management system.

Patent document ES2078831, "Building automation control system for a series of installations and/or electrical appliances", discloses a building automation system with distributed operation having different units, each with a particular associated functionality. These units are connected to a central node which is where the operation logic of the system is located and executed. It is connected with said central node by means of its own communication bus, and the system requires the specific programming and configuration thereof according to the tasks to be performed and the units available.

Patent document US6735619, "Home network gateway apparatus and home network device", discloses two devices. On one hand it describes a device which is connected to electrical appliances and other home appliances to act as an adaptor thereof to the home control network. On the other hand it describes a gateway apparatus with the capability to connect to the Internet containing the software necessary to detect the devices connected to the automation network and make its remote control through the Internet possible. The gateway thus provides users with a graphical web interface from which the user can control the devices of his/her home.

Patent document ES2300231, "Multiprotocol building automation control system with user interface", discloses a building automation control system the main feature of which is being compatible with multiple building automation technologies, thus allowing the integrated control of devices belonging to heterogeneous technologies such as X10 or EIB/KNX.

A review of the current state of the art in the field for which the present invention is intended has allowed identifying the main features of the most relevant inventions. Some of the main drawbacks of systems of this type can be extracted from these features. These are:
1. Many technologies, especially classic building automation technologies, require installing their own communication buses, as well as the obligation of using also proprietary terminal devices, vastly increasing the cost of the electrical installation in households and offices and limiting the offer of available devices.
2. Another drawback of many technologies is that either they do not have autonomous operation capabilities, being limited exclusively to allow the remote control of the installation, or the autonomous operation possibilities of the installation are quite basic, being limited to reactive operations given direct changes detected by the sensors. The definition of said programming is usually static and decided on by the system installers during system start-up. In many cases, said autonomous operation logic is hosted in central devices, which can make system operation difficult in case of faults in some parts of the network or in the central device itself.
3. Finally, another aspect ignored in existing technologies is the security of the instrumentation system both with respect to the confidentiality of the communications and to the access to available device control capabilities.

When analyzing the state of the art in the area of this invention in general, all the inventions have some of the mentioned drawbacks.

These drawbacks have been some of the main obstacles in integrating technologies of this type in homes and offices, since they entail very high increases in construction and installation costs to achieve very limited functionalities.

### Description of the Invention

It is therefore desirable to obtain a reduced cost distributed instrumentation system in home and office environments, said reduced cost referring to both the components and the installation, which has autonomous operation capabilities without requiring using centralized control, having tools and capabilities to easily modify and adapt system operation to user preferences, and assuring the security both of the data handled by the system and of the access to the characteristic functionalities thereof.

To that end, the present invention proposes using commonly used components to design a non-proprietary instrumentation network and constructing terminal instrumentation nodes which facilitate connecting generic devices. This configuration makes contriving systems for reduced cost instrumentation possible.

Finally, the present invention also proposes a series of mechanisms designed to, on one hand, improve the autonomy of the instrumentation network with respect to the functional operation thereof, as well as its installation and configuration. On the other hand, it has mechanisms aimed at assuring the security of communications within the instrumentation network and with external systems, as well as assuring security in the access to the functionality provided by the network.

This and other objectives are achieved by means of the features defined in the independent claims.

Other specific or particularly advantageous embodiments are defined in the dependent claims.

The object of the present invention is therefore a distributed instrumentation terminal device (or node). The invention also relates to a distributed instrumentation central device (or node). A system integrating both devices under one communication network is also described.

### Description of the Drawings

To complement the description which is being made and for the purpose of aiding to better understand the features of the invention according to a preferred practical embodiment thereof, a set of drawings is attached as an integral part of this document in which the following has been depicted with an illustrative and non-limiting character:

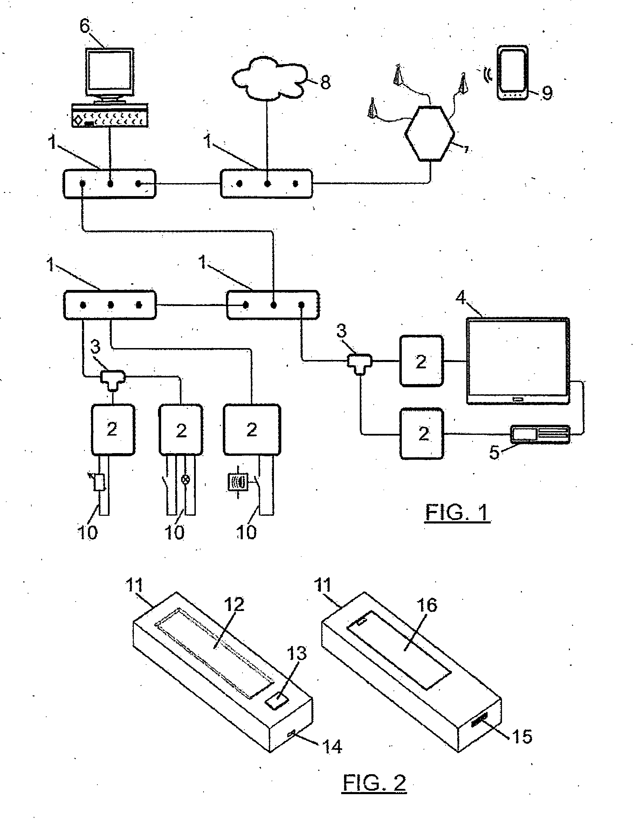

Figure 1 shows a schematic example of an instrumentation network installation according to the proposition of the present invention. The figure shows the hybrid network topology incorporating star topology by means of switches (1) and bus topology by means of T-shaped passive hubs (3). Can also be seen the different elements of the instrumentation network, such as a central node (6), various instrumentation nodes with different connected devices, such as a television (4), a multimedia player (5) or various electronic devices such as switches, presence sensors, thermometers, *inter alia* (10), a wireless access point (7) to support wireless access to the instrumentation network from portable devices (9), as well as the option of having access to the Internet (8) to be able to access the devices remotely.

Figure 2 shows a depiction of a possible embodiment of a device which allows transferring the identification and encryption keys in an instrumentation node of the present invention. Said figure shows the key device (11) itself, the screen (12) to display the available key information, the key transfer button (13), the connector (14) for the I2C connection with the instrumentation node, the USB connector for the computer (15) and the compartment of the battery (16).

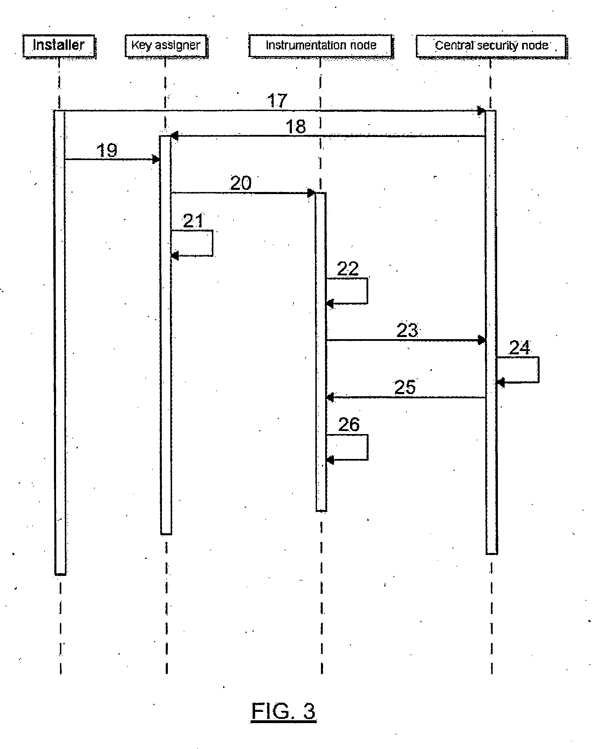

Figure 3 shows a diagram of the operating sequence of the communication security mechanism described for the present invention. The sequence is as follows, (17) the installer connects the key transfer device by means of USB to the central node (usually a computer) and requests the generation of N keys, (18) the central node generates and transfers the keys, (19) the installer connects a device with the keys to an instrumentation node by means of 12C and presses the transfer button, (20) the keys are transferred to the instrumentation node and (21) are eliminated from the key transfer device, (22) the instrumentation node stores the keys, (23) the instrumentation node sends the broadcast message to the instrumentation network encrypted with the public key of the central node, (24) the central node receives the message and decrypts it with its private key, (25) the central node sends the response message with the symmetric key, encrypted with the public key of the instrumentation node, (26) the instrumentation node decrypts the response message with its private key and stores the symmetric key.

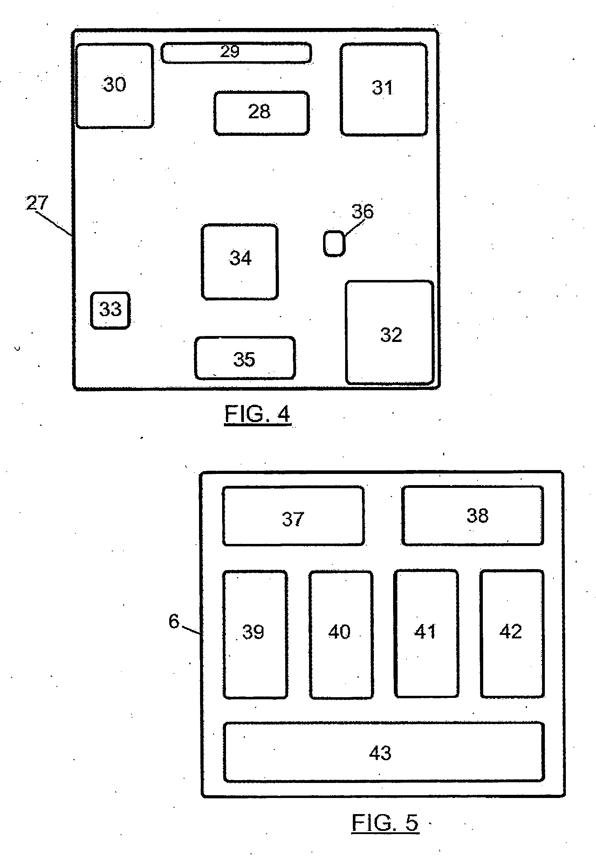

Figure 4 shows a block diagram of the instrumentation node (2) made up of an electronic board (27) containing a minimum functionality: communication module (28), communication connector (29), digital inputs and outputs (30), analog inputs (31), power supply module (32) and a module with storage capacity (33) and a data processing module (34). The functionality of this board is expanded, if necessary, by connecting new specific boards to an expansion connector (35) located in the motherboard.

Figure 5 shows a block diagram of the central node (6) which has a protocol allowing external access to the functionality of the module (37), graphic network configuration tools and instrumentation nodes (38), self-configuring mechanisms (39), control software repository for expansion boards (40), devices database (41), security and privacy mechanisms (42), communication protocol (43).

### Preferred Embodiment of the Invention

For the purpose of complementing the description which is being made, a detailed description of a possible embodiment of the present invention with a non-limiting character is provided below.

Figure 1 illustrates a network design for reduced cost and high efficiency instrumentation and a device for the distributed instrumentation (2) with reduced cost and energy consumption, as well as being expandable and adaptable, for example, with the possibility of being deployed in 50x50x20 mm built-in mounting boxes, or even integrated directly in the end electronic devices, forming part of them.

One of the advantages of the present proposition is providing an instrumentation network that enables obtaining reduced cost and high performance installations with distributed operation.

Another advantage is also achieving reduced consumption and integrating devices of any type in an instrumentation installation, especially those commonly used devices.

To achieve the aforementioned advantages, network technologies such as the Ethernet family, IEEE 802.3, with a hybrid network topology, in which star topology is used by means of switches (1) for connecting different installation areas to each other, such as rooms, floors, etc., are preferably used. A bus topology is used in said areas in which the branches will be formed by means of T-connectors (3) which will contain basic electronics to allow communication. These T-connectors can be passive Ethernet concentrators.

Additionally, the network topology also contemplates the possibility of using wireless technologies, such as the IEEE 802.11 family, integrating access points (7) in the installation for the purpose of supporting communication with wireless or portable devices (9) in the installation. Figure 1 shows a schematic diagram of an instrumentation network example according to the proposition.

The various external devices (10) to be controlled with the instrumentation system would be connected to each other by means of said network. These devices include appliances of any type installed in habitable environments such as homes or offices, including devices intended for comfort, power, security of the installations, the security of people, leisure and all those building automation and task automation aspects.

An expandable and adaptable terminal instrumentation node has particularly been designed by means of using generic electronic components. Using said' type of components, i.e., components manufactured in large quantities and available to the general public, allows considerably reducing the costs of components with respect to using specifically manufactured components, as is the case of classic instrumentation technologies and building automation.

The terminal instrumentation node (2) performs two types of tasks with respect to the external devices (10) connected thereto. On one hand it provides distributed access thereto, such that other components of the system can control said devices remotely, and on the other hand it contains the control logic and configuration allowing the autonomous operation of the connected external devices, even being able to interact with other nodes directly to together carry out complex tasks which a single terminal instrumentation node (2) with its connected external devices (10) could not complete.

The terminal instrumentation node (2) is preferably made up of an electronic board (27) containing a minimum functionality: communication module (28), communication connector (29), digital inputs and outputs (30), analog inputs (31), power supply module (32) and a module with storage capacity (33) and a data processing module (34). The functionality of this board is expanded, if necessary, by connecting new specific boards to an expansion connector (35) located in the motherboard. The system is thus scalable and allows being adapted to different actuating/sensing needs.

As seen in Figure 5, there are central nodes (6) in the network in addition to instrumentation nodes. The role of these nodes is, among others, to provide access to the instrumentation network to components external to the system, such as application software which makes use of the instrumentation network to carry out high level tasks, such as configuring the instrumentation network itself, monitoring it, providing graphic installation management interfaces, etc.

The present embodiment proposes incorporating self-configuring mechanisms of the system which facilitate connecting external devices (10), such as electrical appliances, lighting fixtures, security systems, multimedia systems, sensors and actuators in general, etc., to the instrumentation system, requiring the minimum intervention possible from installers and users. To that end, the instrumentation nodes and central nodes incorporate software implementing a broadcast protocol and automatic device discovery.

Part of the operation logic of said self-configuring mechanisms is located in the central nodes (6). These nodes preferably have graphic user interfaces allowing installers and users to modify the configuration of the installation, which in turn, as will be seen below, has mechanisms to automatically detect changes in the physical configuration thereof, facilitating the connection of new devices to the installation.

When an instrumentation node is connected to the instrumentation network, or when a new expansion board or device is connected to an instrumentation node, the latter will start a broadcast protocol. Said protocol consists of sending a node broadcast device to all the nodes connected to the instrumentation network, both instrumentation and central nodes, which is done by sending a UDP packet to the network broadcast address.

Said broadcast message is received by the central nodes (6), which aggregate the new node terminal (2), or modify it if it already existed, as well as the information regarding it to an available device database. Hereinafter, the new terminal instrumentation node (2) will be available for the system to make use of it.

As mentioned above, the terminal instrumentation nodes (2) are expandable by means of expansion boards. Due to memory limitations and because the system is open to accepting new expansion boards in the future, it is not possible to deploy in the terminal instrumentation nodes (2) all the software necessary to control each of the possible expansion boards. Therefore, during the broadcast and device discovery process, the central node (6) identifies the expansion boards connected to a terminal instrumentation node (2). If the latter does not have the controller software necessary to operate any of the expansion boards connected therewith, the central node starts a software transfer process. The software which it needs to control the new expansion boards connected therewith is transferred to the terminal instrumentation node (2) by means of this mechanism. Said software includes the logic which the terminal instrumentation node (2) must execute to handle the available hardware in the expansion board. This logic depends on each expansion board and includes the protocol for the interaction between the instrumentation node and the specific devices available in each expansion board.

The central node (6) incorporates a control software repository (40) for expansion boards, as well as software tools so that installers and users can manage said repository. The possibility of installing new versions of already existing controller software in the system has especially been taken into account. In said cases, the system will autonomously start a protocol similar to that described above for expansion board control software transfer. Unlike the previous case, in this case the central node (6) will establish communication with those terminal instrumentation nodes (2) containing out-of-date expansion board control software and will transfer the new version to them.

Once the device (4,5,9,10) has been discovered and the initial configuration process has been carried out, including transferring the necessary expansion board control software, it will already be accessible in the network configuration tools which are available to installers and users, as well as being available to be used in the installation.

An instrumentation network which operates in an autonomous and distributed manner is provided such that a fault of a component only affects the devices controlled by said component. Therefore the terminal instrumentation nodes (2) not only enable connecting the external devices (10) to the instrumentation system, but they also contain the protocol enabling autonomous interaction.

Said protocol is defined based on a system of events such that the terminal instrumentation nodes (2), react autonomously to change of state events taking place in other terminal instrumentation nodes (2). This protocol allows specifying associations between states of different devices (4,5,9,10) of the instrumentation network, such that when a change of state is detected in a device, the terminal instrumentation node (2) will send an event to the instrumentation network which will be received by the remaining terminal instrumentation nodes (2). Those terminal instrumentation nodes (2) the devices (4,5,9,10) of which have a specified association with the state of the event received will react autonomously by modifying the state of its local devices (4,5,9,10) according to that specified in the association.

These associations are defined by installers or users by means of the configuration tools available in the central nodes (6) or autonomously by high level application software which is also executed in said central nodes. Once defined, the associations are automatically transferred from the central node to the instrumentation nodes involved which, after that moment, will be able to operate autonomously without needing to be controlled by the central node.

Mechanisms assuring the confidentiality of the information handled by the instrumentation system, as well as the security in accessing the control of the devices deployed in the instrumentation network are proposed. In other words, they assure that only authorized users or systems have the capability of communicating with the instrumentation nodes and central nodes deployed in the network, as well as controlling the accessible devices by means of the latter, and accessing the information transferred between them.

Therefore, both the terminal instrumentation nodes(2) and the central nodes (6) incorporate a mechanism to encrypt the communications established between them. Said mechanism is based on a hybrid system between a public key/private key system and a symmetric key system.

Therefore, asymmetric key encryption system will be used to encrypt the communications between nodes (2,6), and a public key/private key encryption system will be used to authenticate the nodes during the process of establishing the symmetric key necessary for communications.

Each node (2,6) of the instrumentation network will have a public key/private key set which must be installed in the node during its physical installation in the network. Said public key/private key set is generated in a central node which will be responsible for carrying out the process of establishing symmetric keys for encrypting communications.

During the process of broadcasting a new instrumentation node in the network, the instrumentation node uses the public key of the central node to encrypt the broadcast messages (22, 23). The central node (2) will respond to the broadcast message with a message containing the information of the symmetric key which the node must use for communicating with the instrumentation network (25). Said response message is encrypted using the public key of the instrumentation node (24).

From the time the instrumentation node knows the symmetric key (26), it starts to use it to encrypt and decrypt all the communications it has with other nodes of the instrumentation network.

The symmetric key (26) is refreshed every so often by means of a process managed by a central node (6) which generates a new symmetric key and communicates it to the remaining terminal nodes (2) of the network using the public key/private key process described above.

This security system requires the installer of the instrumentation network to suitably initialize each of the nodes of the network, installing a public key/private key pair, as well as the public key of some of the central nodes responsible for managing the encryption system.

The devices (4,5,9,10) must be initialized physically and one device at a time during the physical network installation phase. This has to be done this way to completely assure security in the initial key transmission process, which cannot be carried out through an insecure communication channel, as would be the case of the instrumentation network itself at that time.

To that end, the use of a device designed to that effect which allows storing and transferring keys by using a USB interface for connecting to a computer and an 12C interface for connecting with terminal instrumentation nodes (2) is proposed.

By using the instrumentation network management software which will be enabled in the central nodes (6), specifically in those having the possibility of managing the security system of the network, the installer will be able to generate a number N of public key/private key pairs and store them, together with the public key of the central node (6), in a key transfer device (11).

Once this is done, the installer will have to go to each node (2) (or perform this process before physically mounting them in the installation), connect a key transfer device (11) through the expansion board connector (35) of the terminal instrumentation node (2) (which must be on) and perform the key transfer process towards the instrumentation node (2).

After that time, the terminal instrumentation node (2) already has the key set which it needs to authenticate itself before the central node (6) and to obtain from it the symmetric key by means of the method described above. Figure 3 shows the operating diagram of the described communication security mechanism.

Going back to Figure 1, a functional block diagram of the present invention is depicted. Said diagram shows an embodiment of the three main elements forming the present invention.
a. instrumentation network,
b. central node (6),
c. instrumentation node (2).

The instrumentation network is constructed using a hybrid network topology incorporating star topology by means of 802.3 switches (1) and bus topology by means of 802.3 T-shaped passive hubs (3). Optionally, it is also possible to use 802.11 access points (7) instead of passive hubs, thus supporting access to the instrumentation network by means of wireless devices (9), as well as instrumentation nodes with communication modules under 802.11 wireless technology.

The central node (6) it is made up of a built-in PC with a microprocessor compatible with Intel x86 instructions, such as for example Intel Atom or VIA EPIA, at least 256Mb of RAM memory, 802.3 network interface and RS-232 interface. The control software of the central node, which is implemented using JAVA programming language, is installed in said PC.

The instrumentation node (2) is formed by different modules a possible embodiment of which is described below.

The power supply module (32) of the instrumentation node is formed by a dc/dc converter which lowers the 24V direct current voltage to a 3.3V direct current voltage to supply the remaining systems. This dc/dc converter it is controlled by the LT3602AIDC voltage divider. Other possible options are the power supply by means of Power over Ethernet or battery supply. This power supply module contains an LED to indicate that there is power supply and the correct operation of the source.

The microcontroller (34) used is the PIC18F67J60-I/PT microcontroller. This microcontroller contains an Ethernet controller included therein and it further has an 25 MHz F330 external oscillator (36) necessary for Ethernet communication. The microcontroller can further communicate with the 512 Kbit 24FC512T-I/SM external memory (33) and store data permanently. The microcontroller is responsible for modifying the corresponding digital outputs (30), informing the rest of the network of the values of the input signals, communicating its presence to the remaining nodes of the network by means of the Ethernet communication module, responding to the requests of other nodes connected to the network, storing the data required to be stored in memory and requesting data from other nodes of the network. Its firmware can be updated by means of Ethernet communications.

The Ethernet communication system is made up of a controller (in this embodiment this controller is integrated in the microcontroller) and a transformer and resistances for noise filtering.

The digital inputs of the node (30), eight in total, are connected to the digital inputs of the microcontroller with pull-up resistances and microcontroller protection resistances. A group of four of these inputs is connected to two-way connectors with the ground connection of the board. This group is used as inputs to signals of active devices which have their own power supply or passive devices, such as switches, buttons, presence sensors, etc. The four inputs of the other group are connected to three-way connectors having a ground connection and 3.3V and allow supplying active devices which do not have a power supply.

This node has a specific analog input connected through a three-way connector having a ground connection and 3.3V. Furthermore, the four digital inputs with three-way connectors can be configured to convert them into analog inputs. This configuration allows measuring signals in the 0 to 3.3V range in devices such as potentiometers, light sensors, temperature sensors, etc.

The node provides two different types of digital outputs: open collector outputs and outputs to activate direct current relays. The four open collector outputs are used with two-way connectors (collector and ground connection) and allow operating devices that have their own power supply. The three outputs to activate relays (elements without power supply) have two-way connectors (collector and supply voltage). These outputs are designed for activating inductive loads of up to 500 mA and are therefore equipped with freewheeling diodes for protecting the circuit.

The functionality of this motherboard will be expanded by adding expansion boards to it through a connector (35). Said connector incorporates a communication bus, the different supply voltages, and the inputs and outputs of the microcontroller which are not used. The expansion boards can thus be controlled by the microcontroller of the motherboard or they can have their own microcontroller and communicate with the remaining boards by means of said bus. The chosen bus in this embodiment is the 12C bus since there are many integrated circuits which use it (memories, microcontrollers, sensors, etc.).

The dimensions of the instrumentation node allow its assembly, together with the cables necessary for its connection, inside 50x50x20 mm built-in mounting boxes. Successive expansions of the device can either be stacked inside the same built-in box or be housed in adjacent boxes.

The expansion boards which can be coupled to the base node provide a greater number of inputs and outputs or new functionalities to the system. The boards providing new functionalities are, *inter alia,* the following:
- Communication boards:
   ∘ Wireless
   ∘ Zigbee
   ∘ Bluetooth
   ∘ RS232
   ∘ USB
- Input boards:
   ∘ 4-20 mA analog inputs ,
   ∘ 0-10 V analog inputs
   ∘ digital input expansion
- Output boards:
   ∘ 220 V power outputs
   ∘ direct current power outputs
   ∘ voltage-free contact outputs
   ∘ analog outputs
   ∘ variable resistance outputs

The expansion boards have sensors of consumed intensity at an overall level and for each of the outputs. If solid state relays are used they also include a temperature sensor to control that the board does not heat up excessively.

## Claims

1. A terminal instrumentation node (2) comprising:
- connection means (30,31,35) configured to be electrically coupled with an external appliance (10) to generate an electrical signal for actuating said external appliance (10),
- communication means (28,29) configured to receive or send messages through a local data network to other terminal instrumentation nodes forming a distributed instrumental network,
- encryption means configured to encrypt the messages to be sent generated in the processing means and to decrypt the received messages in the communication means to be processed,
- storage means (33) configured to store keys to encrypt and decrypt messages, said storage means further configured to store information about the operation of the instrumentation node (2) itself, about the states of the network devices (4,5,9,10) attached to the instrumentation network and associations between states,
- processing means (34) configured to update the information of the storage means And modify the state of its local devices (5,5,9,10) Based on the associations between states according to the received messages and configured to identify events defined by detected changes of state occurring in the network devices (4,5,9,10) in order to generate messages to be sent to the other instrumentation nodes according to said events and control the generation of electrical signals in the connection means (30,31,35).

2. The terminal node (2) according to claim 1, **characterized in that** the connection means further comprise an expansion module (35) configured to be connected with another expansion module (35) to allow stacking several expansion modules on one and the same instrumentation node.

3. The terminal node (2) according to claim 2, **characterized in that** the expansion module (35) comprises its own microcontroller configured to implement at least one of the two following modes:
- an autonomous mode configured to establish autonomous control operations of the functions of said expansion module,
- a dependent mode configured to be controlled from the host terminal node (2).

4. The terminal node (2) according to claim 2 or 3, **characterized in that** the connection means comprise at least one analog input and a plurality of digital inputs and outputs.

5. The terminal node (2) according to any one of claims 2 to 4, **characterized in that** it is configured to implement an initialization process based on sending a broadcast message to all the nodes (2,6) and/or expansion modules (35) available in the instrumentation network in order to update the information present in the storage means.

6. The terminal node (2) according to any one of the preceding claims, **characterized in that** the communication means are configured to implement at least one of the following protocols: protocol according to IEEE 802.3 or protocol according to IEEE 802.11.

7. The terminal node (2) according to any one of the preceding claims, **characterized in that** the encryption means are configured to implement a symmetric key encryption and a public key/private key encryption to previously authenticate the nodes during the process for establishing the symmetric key.

## Patentansprüche

1. Terminal-Instrumentationsknoten (2), umfassend:
- Verbindungsmittel (30, 31, 35), welche ausgebildet sind, um elektrisch an ein externes Gerät (10) angeschlossen zu werden, um ein elektrisches Signal zur Betätigung des externen Geräts (10) zu erzeugen,
- Kommunikationsmittel (28, 29), welche ausgebildet sind, um Nachrichten durch ein lokales Datennetzwerk zu empfangen oder an andere Terminal-Instrumentationsknoten, welche ein verteiltes Instrumentennetzwerk bilden, zu senden,
- Verschlüsselungsmittel, welche ausgebildet sind, um die in den Verarbeitungsmitteln erzeugten zu sendenden Nachrichten zu verschlüsseln und die in den Kommunikationsmitteln empfangenen zu verarbeitenden Nachrichten zu entschlüsseln,
- Speichermittel (33), welche ausgebildet sind, um Schlüssel zum Verschlüsseln und Entschlüsseln von Nachrichten zu speichern, wobei die Speichermittel weiterhin ausgebildet sind, um Informationen bezüglich des Betriebs des Instrumentationsknotens (2) selbst, bezüglich den Zuständen der mit den Instrumentationsnetzwerken verbundenen Netzwerkvorrichtungen (4, 5, 9, 10) und Verknüpfungen zwischen Zuständen zu speichern,
- Verarbeitungsmittel (34), welche ausgebildet sind, um die Informationen der Speichermittel zu aktualisieren und den Zustand ihrer lokalen Vorrichtungen (5, 5, 9, 10) auf Grundlage der Verknüpfungen zwischen Zuständen gemäß den empfangenen Nachrichten abzuändern und welche ausgebildet sind, um Ereignisse zu bestimmen, welche durch in den Netzwerkvorrichtungen (4, 5, 9, 10) auftretende erkannte Zustandsänderungen definiert werden, um an die anderen Instrumentationsknoten zu sendende Nachrichten gemäß den Ereignissen zu erzeugen und die Erzeugung von elektrischen Signalen in den Verbindungsmitteln (30, 31, 35) zu steuern.

2. Terminalknoten (2) nach Anspruch 1, **dadurch gekennzeichnet, dass** die Verbindungsmittel weiterhin ein Expansionsmodul (35) umfassen, welches ausgebildet ist, um mit einem weiteren Expansionsmodul (35) verbunden zu werden, um ein Stapeln von mehreren Expansionsmodulen auf demselben Instrumentationsknoten zu ermöglichen.

3. Terminalknoten (2) nach Anspruch 2, **dadurch gekennzeichnet, dass** das Expansionsmodul (35) einen eigenen Mikrocontroller umfasst, welcher ausgebildet ist, um zumindest einen der folgenden Modi zu implementieren:
- einen autonomen Modus, welcher konfiguriert ist, um autonome Steuervorgänge der Funktionen des Expansionsmoduls zu erstellen,
- einen abhängigen Modus, welcher konfiguriert ist, um von dem Host-Terminalknoten (2) gesteuert zu werden.

4. Terminalknoten (2) nach Anspruch 2 oder 3, **dadurch gekennzeichnet, dass** die Verbindungsmittel zumindest einen analogen Eingang und eine Vielzahl an digitalen Eingängen und Ausgängen umfassen.

5. Terminalknoten (2) nach einem der vorherigen Ansprüche 2 bis 4, **dadurch gekennzeichnet, dass** er ausgebildet ist, um einen Initialisierungsprozess zu implementieren, welcher auf dem Senden einer Funknachricht an alle Knoten (2, 6) und/oder Expansionsmodule (35), welche im Instrumentationsnetzwerk verfügbar sind, basiert, um die in den Speichermitteln vorhandenen Informationen zu aktualisieren.

6. Terminalknoten (2) nach einem der vorherigen Ansprüche, **dadurch gekennzeichnet, dass** die Kommunikationsmittel ausgebildet sind, um zumindest eines der folgenden Protokolle zu implementieren: ein Protokoll gemäß IEEE 802.3 oder ein Protokoll gemäß IEEE 802.11.

7. Terminalknoten (2) nach einem der vorherigen Ansprüche, **dadurch gekennzeichnet, dass** die Verschlüsselungsmittel ausgebildet sind, um eine symmetrische Key-Verschlüsselung und eine Public-Key-/Private-Key-Verschlüsselung zu implementieren, um die Knoten während des Prozesses zum Erstellen des symmetrischen Schlüssels vorab zu authentifizieren.

## Revendications

1. Un noeud d'instrumentation terminal (2) comprenant :
- des moyens de connexion (3, 31, 35) configurés pour être couplés électriquement à un dispositif externe (10) pour générer un signal électrique pour actionner ledit appareil externe (10) ;
- des moyens de communication (28, 29) configurés pour recevoir ou envoyer des messages à travers d'un réseau de données local vers d'autres noeuds d'instrumentation terminaux formant un réseau instrumental distribué ;
- des moyens de chiffrement configurés pour chiffrer les messages à envoyer générés dans les moyens de traitement et pour déchiffrer les messages reçus dans les moyens de communication à traiter ;
- des moyens de stockage (33) configurés pour stocker des clés pour chiffrer et déchiffrer les messages, lesdits moyens de stockage par ailleurs configurés pour stocker les informations concernant le fonctionnement du noeud d'instrumentation (2) lui-même, concernant l'état des appareils du réseau (4, 5, 9, 10) reliés au réseau d'instrumentation et les associations entre états ;
- des moyens de traitement (34) configurés pour mettre à jour les informations des moyens de stockage et modifier l'état de ses appareils locaux (5, 5, 9, 10) sur la base des associations entre les états, en fonction des messages reçus et configurés pour identifier des événements définis par des changements d'état détectés qui se produisent dans les appareils du réseau (4, 5, 9, 10) afin de générer des messages à envoyer aux autres noeuds d'instrumentation selon lesdits événements et pour contrôler la génération de signaux électriques dans les moyens de connexion (30, 31, 35).

2. Le noeud terminal (2) selon la revendication 1, **caractérisé en ce que** les moyens de connexion comprennent par ailleurs un module d'extension (35) configuré pour être connecté à un autre module d'extension (35) pour permettre l'empilement de plusieurs modules d'extension sur un seul et même noeud d'instrumentation.

3. Le noeud terminal (2) selon la revendication 2, **caractérisé en ce que** le module d'extension (35) comprend son propre microcontrôleur configuré pour mettre en oeuvre au moins l'un des deux modes suivants :
- un mode autonome configuré pour établir des opérations de contrôle autonomes des fonctions dudit module d'extension ;
- un noeud dépendant configuré pour être contrôlé depuis le noeud terminal hôte (2).

4. Le noeud terminal (2) selon la revendication 2 ou 3, **caractérisé en ce que** les moyens de connexion comprennent au moins une entrée analogique et une pluralité d'entrées et de sorties numériques.

5. Le noeud terminal (2) selon l'une quelconque des revendications 2 à 4, **caractérisé en ce qu'**il est configuré pour mettre en oeuvre un processus d'initialisation sur la base de l'envoi d'un message de diffusion à tous les noeuds (2, 6) et/ou aux modules d'extension (35) disponibles dans le réseau d'instrumentation afin de mettre à jour les informations présentes dans les moyens de stockage.

6. Les noeuds terminaux (2) selon l'une quelconque des revendications précédentes, **caractérisés en ce que** les moyens de communication sont configurés pour mettre en oeuvre au moins l'un des protocoles suivants : protocole selon la norme IEEE 802.3 ou le protocole selon la norme IEEE 802.11.

7. Le noeud terminal (2) selon l'une quelconque des revendications précédentes, **caractérisé en ce que** les moyens de chiffrement sont configurés pour mettre en oeuvre une clé symétrique de chiffrement et une clé publique/privée de chiffrement pour authentifier auparavant les noeuds pendant le processus pour établir la clé symétrique.
